# FASCICULE DE BREVET EUROPEEN

(11) **EP 3 070 152 B1**
(45) Date de publication et mention de la délivrance du brevet: **28.02.2018**
(21) Numéro de dépôt: 15159582.4
(22) Date de dépôt: 18.03.2015
(51) Int. Cl.: C10M 107/38, C10N 40/06, C10N 50/02

(54) **SUBSTRAT COMPRENANT UNE SURFACE RECOUVERTE D'UN AGENT ÉPILAME ET PROCÉDÉ D'ÉPILAMAGE D'UN TEL SUBSTRAT**
SUBSTRAT, DAS EINE MIT EPILAMISIERUNGSMITTEL BEDECKTE OBERFLÄCHE UMFASST, UND EPILAMISIERUNGSVERFAHREN EINES SOLCHEN SUBSTRATS
SUBSTRATE COMPRISING A SURFACE COVERED WITH AN EPILAMIZATION AGENT AND METHOD FOR EPILAMING SUCH A SUBSTRATE

(43) Date de publication de la demande: 21.09.2016
(73) Titulaire: The Swatch Group Research and Development Ltd., 2074 Marin (CH)
(72) Inventeur: Letondor, Christophe, 2525 Le Landeron (CH); Rannoux, Claire, 1003 Lausanne (CH)
(74) Mandataire: Honoré, Anne-Claire

(56) Documents cités:
- WO-A1-2012/085130
- WO-A1-2014/009058
- DD-A1- 238 812
- DD-A1- 251 987
- JP-A- 2007 284 644
- RU-C1- 2 041 249
- US-A1- 2012 088 099
- US-A1- 2012 264 884
- DATABASE WPI Week 197140 Thomson Scientific, London, GB; AN 1971-64021S XP002743974, & SU 290 962 A (CLOCK IND RES INST) 1971
- DATABASE WPI Week 200604 Thomson Scientific, London, GB; AN 2006-038911 & WO 2005/116153 A1 (SEIMI CHEM CO LTD) 8 December 2005 (2005-12-08)
- DATABASE WPI Week 201068 Thomson Scientific, London, GB; AN 2010-M79427 & WO 2010/113646 A1 (AGC SEIMI CHEM CO LTD) 7 October 2010 (2010-10-07)

## Description

### Domaine de l'invention

La présente invention se rapporte au domaine de la mécanique et notamment au domaine de l'horlogerie ou de la bijouterie. Elle concerne plus particulièrement un substrat, notamment un substrat d'un élément d'une pièce d'horlogerie ou de bijouterie comprenant une surface recouverte au moins partiellement d'un agent épilame. Elle concerne également un procédé d'épilamage d'un tel substrat, ainsi qu'une pièce d'horlogerie ou de bijouterie comprenant un élément comportant un tel substrat.

### Arrière-plan de l'invention

Il existe différents procédés pour modifier l'état de surface d'un substrat par un traitement au moyen d'un agent approprié de manière à améliorer spécifiquement certaines propriétés de surface. Par exemple, dans le domaine de la mécanique, et en particulier dans le domaine de l'horlogerie, mais aussi dans le domaine de la bijouterie, l'épilamage d'une surface d'une pièce ou d'un élément est souvent réalisé au moyen d'un agent épilame afin de contrôler et de réduire l'énergie de surface de ladite surface au cours de son utilisation. Plus particulièrement, un agent épilame a pour but d'empêcher l'étalement des huiles ou lubrifiants sur les éléments d'une pièce d'horlogerie ou de bijouterie en formant une surface hydrophobe et lipophobe permettant au lubrifiant de rester à un endroit prédéterminé de la surface traitée.

Toutefois, les substances utilisées à l'heure actuelle pour l'épilamage présentent différents inconvénients. Plus spécifiquement, les agents épilames connus, tels que le Fixodrop® FK/BS de Moebius® ou la gamme Fluorad™ de 3M™, présentent une mauvaise résistance aux lavages horlogers. La demande de brevet US 2012/0088099 résout partiellement ce problème en proposant d'utiliser un agent épilame porteur d'une fonction catéchol en bout de chaine, cette fonction catéchol étant capable de se fixer solidement à la surface des substrats. Toutefois, la résistance aux lavages horlogers de ces agents épilames n'a pas été améliorée sur tous les substrats, notamment sur l'or et l'acier qui sont des substrats très fréquents dans le domaine de l'horlogerie ou de la bijouterie. Ainsi, l'utilisation des agents épilames connus est généralement limitée à certains matériaux, ce qui oblige l'utilisateur à avoir à sa disposition différents types d'agents épilames en fonction de la nature des surfaces à traiter. Une solution pour résoudre ce problème est décrite par exemple dans la demande WO 2012/085130. Cette solution consiste à utiliser comme composition épilame un mélange de composés de nature différente (thiol et biphosphonique) dont l'effet synergique favorise l'adhésion de l'épilame sur le substrat. Toutefois, la synthèse de chacun de ces composés nécessite au moins quatre étapes, de sorte que le procédé de synthèse pour l'ensemble de la composition épilame est long et complexe.

### Résumé de l'invention

L'invention a notamment pour objectif de pallier les différents inconvénients des agents épilames connus.

Plus précisément, un objectif de l'invention est de fournir un agent épilame offrant une résistance aux lavages accrue par rapport aux agents épilames connus.

L'invention a également pour objectif de fournir un agent épilame universel pouvant être utilisé pour tout type de matériau.

L'invention a également pour objectif de fournir un agent épilame simple à fabriquer en peu d'étapes.

A cet effet, la présente invention concerne un substrat comprenant une surface dont au moins une partie est recouverte d'un agent épilame.

Selon l'invention, ledit agent épilame comprend au moins un composé sous la forme d'un copolymère bloc comprenant au moins un bloc d'unités M associées par liaisons covalentes par leurs chaines principales, et au moins un bloc d'unités N associées par liaisons covalentes par leurs chaines principales, lesdits blocs étant connectés entre eux par liaisons covalentes par leurs chaines principales en séquences linéaires, où 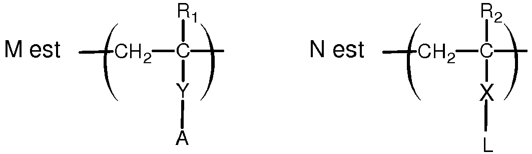
où R₁, R₂, identiques ou différents, sont H, un groupe alkyle en C₁-C₁₀, alkényle en C₁-C₁₀, et de préférence H, CH₃
Y, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
A, constitue un groupement d'ancrage au substrat, et le bloc d'unités M comprend au moins deux groupes A différents thioether et alkoxysilane
L, identique ou différent, est un groupement carboné en C₁-C₂₀ halogéné, de préférence fluoré.

Un tel agent épilame présente une résistance aux lavages améliorée et présente un caractère universel, autorisant son utilisation pour tout type de matériau.

La présente invention concerne également un procédé d'épilamage d'au moins une partie d'une surface d'un substrat comprenant les étapes de :
a) préparation d'un agent épilame comprenant au moins un copolymère bloc tel que défini ci-dessus
b) optionnellement, préparation de la surface du substrat
c) mise en contact de la surface du substrat avec l'agent épilame
d) séchage.

La présente invention concerne également l'utilisation d'un copolymère bloc comprenant au moins un bloc d'unités M associées par liaisons covalentes par leurs chaines principales, au moins un bloc d'unités N associées par liaisons covalentes par leurs chaines principales, au moins l'un du bloc d'unités M et du bloc d'unités N comprenant optionnellement au moins une unité P, associée par liaisons covalentes par leurs chaines principales, lesdits blocs étant connectés entre eux par liaisons covalentes par leurs chaines principales en séquences linéaires où 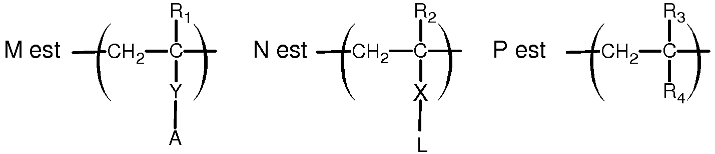
où R₁, R₂, R₃, identiques ou différents, sont H, un groupe alkyle en C₁-C₁₀, alkényle en C₁-C₁₀, et de préférence H, CH₃
Y, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
A, constitue un groupement d'ancrage au substrat, et le bloc d'unités M comprend au moins deux groupes A différents thioether et alkoxysilane
L, identique ou différent, est un groupement carboné en C₁-C₂₀ halogéné, de préférence fluoré
R₄, identique ou différent, est H, CH₃, une chaîne hydrocarbonée pouvant contenir au moins un hétéroatome, linéaire ou ramifiée, saturée ou insaturée, comprenant au moins 2 atomes de carbone, comme agent épilame d'au moins une partie d'une surface d'un substrat, notamment destiné à l'horlogerie ou à la bijouterie.

La présente invention concerne également une pièce d'horlogerie ou de bijouterie comprenant un élément comportant un substrat tel que défini ci-dessus.

### Description détaillée de l'invention

Conformément à la présente invention, un substrat, notamment un substrat d'un élément d'une pièce d'horlogerie ou de bijouterie, comprend une surface dont au moins une partie est recouverte d'un agent épilame, ledit agent épilame comprenant au moins un composé sous la forme d'un copolymère bloc comprenant au moins un bloc d'unités M associées par liaisons covalentes par leurs chaines principales, et au moins un bloc d'unités N associées par liaisons covalentes par leurs chaines principales, au moins l'un du bloc d'unités M et du bloc d'unités N comprenant optionnellement au moins une unité P, associée par liaisons covalentes par leurs chaines principales, lesdits blocs étant connectés entre eux par liaisons covalentes par leurs chaines principales en séquences linéaires, où 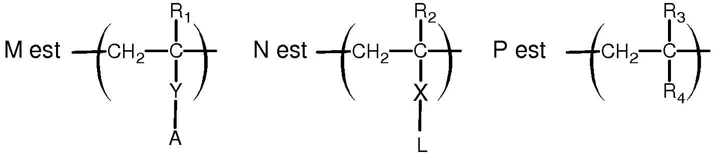
où R₁, R₂, R₃, identiques ou différents, sont H, un groupe alkyle en C₁-C₁₀, alkényle en C₁-C₁₀, et de préférence H, CH₃
Y, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
A, constitue un groupement d'ancrage au substrat, et le bloc d'unités M comprend au moins deux groupes A différents thioether et alkoxysilane
L, identique ou différent, est un groupement carboné en C₁-C₂₀ halogéné, de préférence fluoré
R₄, identique ou différent, est H, CH₃, une chaîne hydrocarbonée pouvant contenir au moins un hétéroatome, linéaire ou ramifiée, saturée ou insaturée, comprenant au moins 2 atomes de carbone.

De préférence, le copolymère bloc comprend au moins un bloc d'unités M associées par liaisons covalentes par leurs chaines principales, et au moins un bloc d'unités N associées par liaisons covalentes par leurs chaines principales, au moins l'un du bloc d'unités M et du bloc d'unités N comprenant optionnellement au moins une unité P, associée par liaisons covalentes par leurs chaines principales, lesdits blocs étant connectés entre eux par liaisons covalentes par leurs chaines principales en séquences linéaires, où 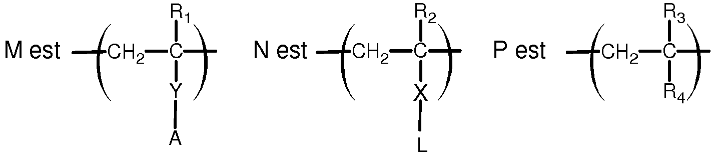
où R₁, R₂, R₃, identiques ou différents, sont H, un groupe alkyle en C₁-C₁₀, alkényle en C₁-C₁₀, et de préférence H, CH₃,
Y, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
A, constitue un groupement d'ancrage au substrat, et le bloc d'unités M comprend au moins deux groupes A différents thioether et alkoxysilane
L, identique ou différent, est un groupement carboné en C₁-C₂₀ halogéné, de préférence fluoré
R₄, identique ou différent, est H, CH₃, une chaîne hydrocarbonée pouvant contenir au moins un hétéroatome, linéaire ou ramifiée, saturée ou insaturée, comprenant au moins 2 atomes de carbone, à l'exception du copolymère :

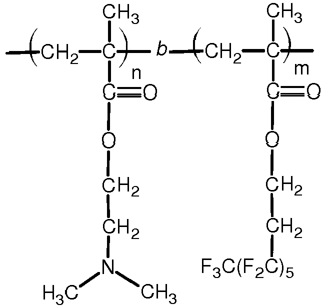

De préférence, le copolymère bloc ne comprend ou n'est constitué que de blocs d'unités M et de blocs d'unités N, au moins l'un du bloc d'unités M et du bloc d'unités N comprenant optionnellement au moins une unité P.

Les blocs d'unités M et d'unités N, qui comprennent optionnellement au moins une unité P, sont reliés entre eux par liaisons covalentes par leurs chaines principales en séquences linéaires, de sorte que le copolymère bloc peut s'écrire sous la forme :

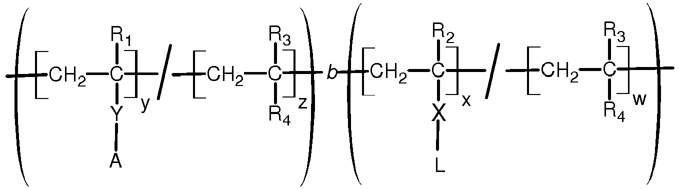

De préférence, le copolymère bloc comprend un seul bloc d'unités M et un seul bloc d'unités N, au moins l'un du bloc d'unités M et du bloc d'unités N comprenant optionnellement au moins une unité P. Quand elles sont présentes, le nombre z d'unités P dans le bloc d'unités M peut varier du nombre w d'unités P dans le bloc d'unités N.

De préférence, les unités P sont intégrées et réparties au sein du bloc composé des unités N, par exemple par copolymérisation statistique d'unités P avec les unités N pour former un seul bloc constitué majoritairement d'unités N et assimilé à un bloc d'unités N.

D'une manière avantageuse, les groupements Y, X, identiques ou différents, sont choisis parmi le groupe comprenant des groupes esters en C₁-C₂₀, de préférence en C₂-C₁₀, plus préférentiellement en C₂-C₆, et encore plus préférentiellement en C₂-C₅, de préférence des groupes alkylesters, de préférence linéaires, des groupes amides, et des groupes dérivés du styrène.

Les groupements fonctionnels d'intérêt A sont aptes à réagir avec la surface du substrat à épilamer, de manière à constituer des groupements d'ancrage de l'agent épilame à la surface du substrat. Avantageusement, des groupements A peuvent également être prévus en terminaison du bloc d'unités M.

D'une manière avantageuse, le bloc d'unités M comprend au moins deux groupes A différents.

Les groupements fonctionnels d'intérêt L sont responsables de l'effet épilame. Ils comprennent au moins un atome d'halogène, de préférence un atome de fluor. D'une manière préférée, L est un groupement carboné en C₂-C₂₀, de préférence en C₄-C₁₀, et plus préférentiellement en C₆-C₉. L est partiellement ou totalement halogéné. D'une manière avantageuse, L est un groupement au moins partiellement fluoré, et de préférence totalement fluoré. L peut également comprendre un atome d'hydrogène sur le groupe terminal.

Les groupements fonctionnels d'intérêt R₄ des unités P sont utilisés pour modifier les propriétés de l'agent épilame et/ou apporter d'autres fonctions. Par exemple, R₄ peut être une chaine alkyle utilisée pour modifier l'angle de contact obtenu ou une chaine capable de constituer des points de réticulation lors d'une étape de réticulation complémentaire (étape e). Il est bien évident que R₄ présent dans le bloc d'unités M peut être différent du R₄ présent dans le bloc d'unités N.

De préférence, le copolymère bloc comprend entre 0.1% et 50%, de préférence entre 5% et 30%, et plus préférentiellement entre 5% et 20% d'unités M, entre 1% et 99.9%, de préférence entre 50% et 99.9%, et plus préférentiellement entre 80% et 95% d'unités N, et entre 0% et 50%, de préférence entre 0% et 30%, et plus préférentiellement entre 0% et 10% d'unités P, les pourcentages étant exprimés par rapport au nombre total d'unités (x+y+z+w).

D'une manière avantageuse, le copolymère bloc comprend entre 10 et 350 unités (x+y+z+w).

D'une manière particulièrement avantageuse, les unités M, N, P sont choisies pour porter plusieurs groupements A de nature différente, plusieurs groupements L, de préférence de même nature, et éventuellement un ou plusieurs groupements R₄ qui peuvent être identiques ou de nature différente, de manière à affiner et à améliorer les propriétés de l'agent épilame, afin d'obtenir plus spécifiquement un agent épilame universel et présentant une affinité améliorée avec le substrat.

De préférence, la surface du substrat dont au moins une partie est recouverte de l'agent épilame est réalisée dans un matériau choisi parmi le groupe comprenant les métaux, les oxydes métalliques, dopés ou non, les polymères, le saphir, le rubis, le silicium, les oxydes de silicium, les nitrures de silicium, les carbures de silicium, les DLC (Diamond Like Carbon), et leurs alliages.

Plus précisément, la surface du substrat peut être réalisée en acier, ou en métaux nobles tels que or, rhodium, palladium, platine, ou en oxydes métalliques, dopés ou non d'aluminium, zirconium, titane, chrome, manganèse, magnésium, fer, nickel, cuivre, zinc, molybdène, argent, tungstène, ou en polyoxyméthylène ou en acrylamide, ainsi que leurs alliages.

La présente invention concerne également un procédé d'épilamage d'au moins une partie d'une surface d'un substrat comprenant les étapes de :
a) préparation d'un agent épilame comprenant au moins un copolymère bloc tel que défini ci- dessus
b) optionnellement, préparation de la surface du substrat, notamment par nettoyage selon les procédés horlogers standards,
c) mise en contact de la surface du substrat avec l'agent épilame
d) séchage.

De préférence, la préparation de l'agent épilame est réalisée par copolymérisation en bloc de monomères aptes à former au moins un bloc d'unités M et de monomères aptes à former au moins un bloc d'unités N, la copolymérisation en bloc des monomères aptes à former au moins un bloc d'unités M ou au moins un bloc d'unités N s'effectuant optionnellement avec des monomères aptes à former au moins une unité P.

Les techniques de copolymérisation en bloc sont bien connues de l'homme du métier et ne nécessitent pas de description détaillée. Un mode de polymérisation particulièrement approprié est la copolymérisation contrôlée successive :
- de monomères aptes à former au moins un bloc d'unités M et optionnellement avec des monomères aptes à former au moins une unité P
- de monomères aptes à former au moins un bloc d'unités N, et optionnellement avec des monomères aptes à former au moins une unité P, P identique ou différente.

Deux modes de polymérisation particulièrement appropriés sont la copolymérisation radicalaire par transfert d'atomes (ATRP) et la polymérisation radicalaire contrôlée par transfert de chaîne réversible par addition-fragmentation (RAFT), en solution ou en émulsion.

Selon une première variante, le copolymère bloc peut être obtenu par polymérisation, de préférence radicalaire contrôlée, de monomères portant les chaines latérales Y-A avec éventuellement des monomères portant les chaines latérales R₄, suivie de la copolymérisation, de préférence radicalaire contrôlée, de monomères portant les chaines latérales X-L avec éventuellement des monomères portant les chaines latérales R₄, R₄ identique ou différent.

Selon une autre variante, le copolymère bloc peut être obtenu par polymérisation, de préférence radicalaire contrôlée, de monomères portant les chaines latérales Y adéquates avec éventuellement des monomères portant des chaines latérales destinées à porter R₄, suivie de la copolymérisation, de préférence radicalaire contrôlée, de monomères portant les chaines latérales X adéquates avec éventuellement des monomères portant des chaines latérales destinées à porter R₄, puis les chaines latérales sont modifiées, par exemple par « click chemistry », pour y introduire les groupements fonctionnels d'intérêt A, L et les groupes R₄.

De préférence, les monomères sont choisis parmi le groupe comprenant les monomères acrylates, méthacrylates, acrylamides, méthacrylamides, vinyliques, diéniques, styréniques et oléfiniques.

Les monomères acrylates, méthacrylates, acrylamides, méthacrylamides, vinyliques et styréniques sont particulièrement préférés. Ces produits sont connus et pour la plupart disponibles sur le marché ou accessibles en une étape de synthèse.

Les monomères particulièrement préférés sont :

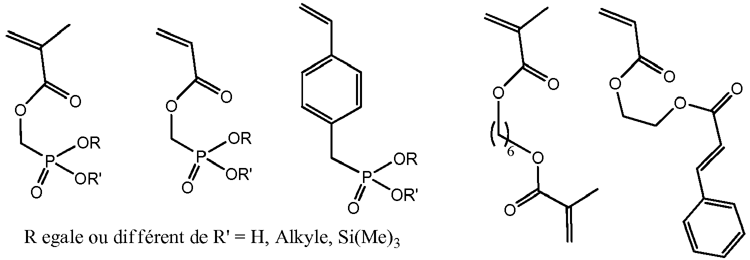

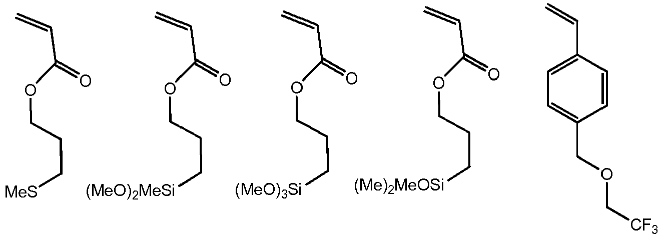

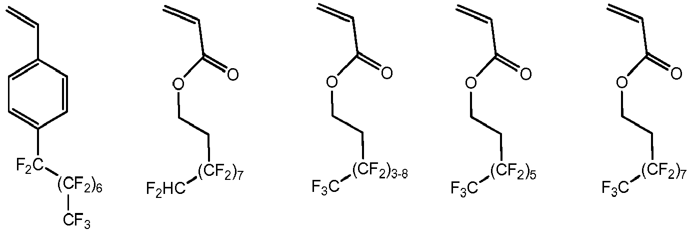

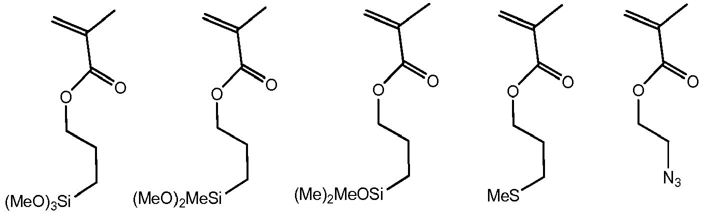

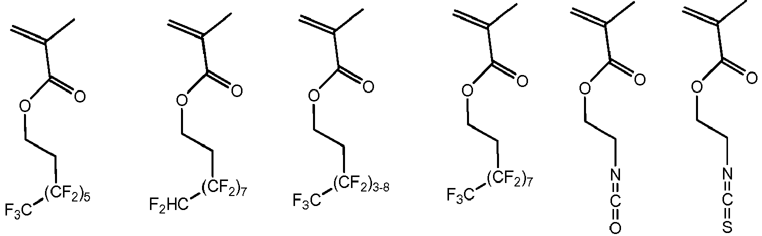

Ainsi, le copolymère utilisé comme agent épilame peut être facilement obtenu en un nombre limité d'étapes à partir de produits commercialisés.

Un des copolymères utilisé de préférence dans la présente invention présente la structure suivante (I)

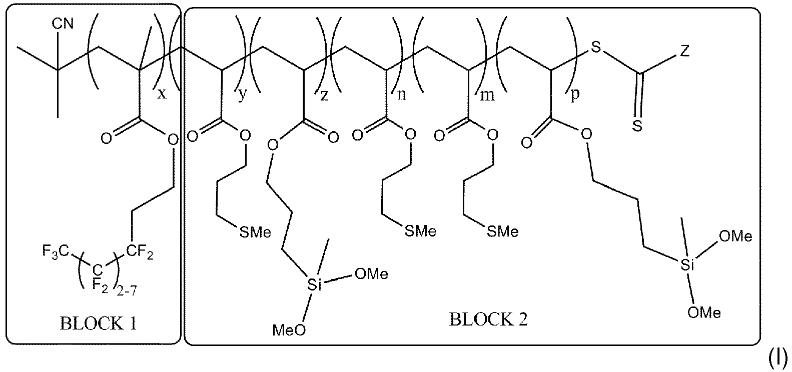

Un autre copolymère utilisé de préférence dans la présente invention présente la structure suivante (II):

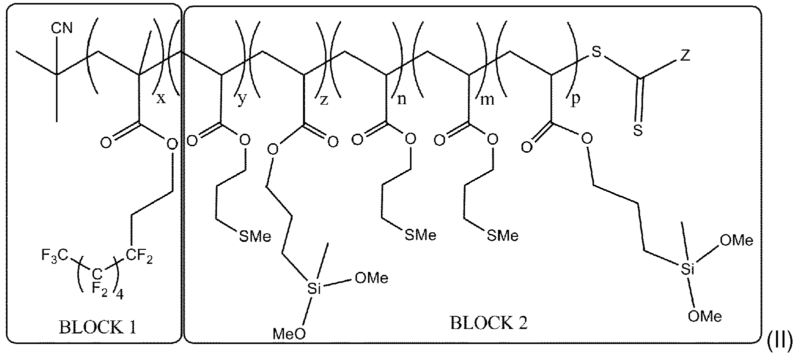

Les copolymères utilisés dans l'invention peuvent être obtenus sous la forme de poudre ou de liquide visqueux. Ils peuvent ensuite être mis en solution dans un solvant fluoré, tel que les hydrocarbures perfluorés ou fluorés, les perfluoropolyethers, les hydrofluorooléfines, les hydrofluoroethers, à des concentrations comprises de préférence entre 50 mg/L et 250 mg/L, afin d'obtenir une solution d'agent épilame, qui sera utilisée pour le traitement des surfaces à épilamer.

Selon les variantes, le procédé d'épilamage selon l'invention peut comprendre en outre, après l'étape c), une étape e) de réticulation complémentaire, rendue possible notamment par la présence des groupes fonctionnels d'intérêt appropriés prévus sur les chaines latérales R₄ des unités P.

Le substrat selon l'invention présente une surface recouverte d'un agent épilame simple et économique à synthétiser, présentant une affinité avec tout type de substrat et une résistance aux lavages améliorées par rapport aux agents épilames connus. Un élément ou une pièce présentant un substrat conforme à l'invention peut être utilisé dans tout type d'applications dans le domaine mécanique, et plus particulièrement dans la mécanique de précision, et notamment l'horlogerie et la bijouterie.

Les exemples suivants illustrent la présente invention sans toutefois en limiter la portée.

### Exemple 1

On synthétise un agent épilame sous la forme d'un copolymère bloc par polymérisation radicalaire contrôlée de :
- 1H,1H,2H,2H-Perfluorodecylméthacrylate
- 3-acryloxopropyl methyldimethoxysilane / 3-acryloxopropyl methyl thioether (obtenu selon le mode opératoire décrit dans la littérature : Preparation of biomimetic polymer hydrogel materials for contact lenses Bertozzi, Carolyn et al. US 6552103)
selon le mode opératoire suivant:
dans un tube de Schlenk contenant la cyclohexanone (1 mL) et 2 mL de Novec™ hydrofluoroether HFE-7200 (3M™) préalablement dégazé à l'azote, sont ajoutés l'agent RAFT (42 µL) et le 1H,1H,2H,2H-Perfluorodecylacrylate. 0.2 mL d'une solution d'azobisisobutyronitrile (AIBN) à 0.122mol/L est ajouté. Le milieu réactionnel est agité et chauffé à 85°C pendant 6h. Le polymère est coagulé dans le méthanol puis lavé avec 3*30mL. Le polymère est obtenu sous forme d'une poudre jaunâtre. Le polymère précédemment obtenu est dissous dans la cyclohexanone (1 mL) et 2 mL de Novec™ hydrofluoroether HFE-7200 (3M™) préalablement dégazé à l'azote, puis le 3-acryloxopropyl methyldimethoxysilane (211µL) et 3-acryloxopropyl methyl thioether (154µL) sont ajoutés. 0.2 mL d'une solution d'AIBN à 0.122mol/L est ajouté. Le milieu réactionnel est agité et chauffé à 85°C pendant 12h. Le polymère est coagulé dans le méthanol puis lavé avec 3*50mL. Le polymère est obtenu sous forme d'une poudre jaunâtre (rendement =76%).

On obtient le copolymère bloc suivant :

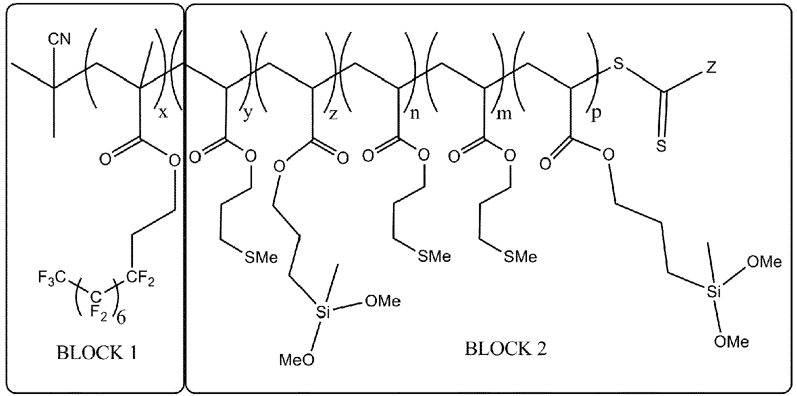

### Exemple 2 : Résistance au lavage

### Procédures utilisées :

### Préparation des substrats :

Avant le traitement épilame, des substrats de différente nature sont nettoyés par les procédés horlogers standards. Plus particulièrement, les pièces sont nettoyées avec une solution de Rubisol en présence d'ultrasons, rincées 3 fois avec de l'alcool isopropylique, puis séchées à l'air chaud.

### Traitement épilame des substrats :

Les substrats sont épilamés par immersion (environ 5 min) dans une solution de l'agent épilame (solvant : Vertrel® Suprion™ de DuPont™ à 250mg/L) puis séchage à l'air chaud.

### Résistance aux lavages :

La résistance aux lavages des agents épilames est évaluée après 3 lavages successifs (lavage horloger standard avec une solution de Rubisol) des pièces épilamées.

### Angles de contact:

L'efficacité de l'agent épilame est évaluée par le dépôt de gouttes de 2 lubrifiants: huile MOEBIUS Testöl 3 et 9010. Pour chaque lubrifiant et chaque agent épilame, les angles de contact entre les substrats et les lubrifiants ont été mesurés sur un appareil Dataphysics de type OCA.

### Résultats:

Les différents substrats sont épilamés avec l'agent épilame de l'exemple 1. Puis les substrats sont lavés avec 3 lavages horlogers.

A titre comparatif, différents substrats sont épilamés :
- soit avec le Fixodrop® FK/BS de Moebius® (parmi les épilames du marché les plus utilisés)
- soit avec l'agent épilame M51 ci-dessous, décrit dans la publication WO 2014/009058
suivi de 3 lavages horlogers.

### Polymère M51

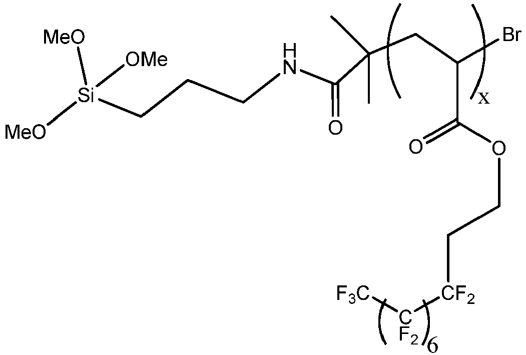

L'agent épilame M51 est connu comme l'un des agents épilames résistant le mieux aux lavages horlogers.

Des gouttes d'huile Testöl 3, respectivement d'huile 9010, sont déposées sur chaque substrat épilamé et les angles de contact entre les substrats et les lubrifiants sont mesurés.

Les résultats sont indiqués dans les tableaux ci-dessous qui rapportent les valeurs des angles de contact mesurés:

**Tableau 1 :**

| Angles de contact mesurés avec l'huile MOEBIUS 9010 | | | | | | |
|---|---|---|---|---|---|---|
| | Substrat | | | | | |
| Agent épilame | Saphir | Acier | Nickel | Rhodium | Or | polyoxyméthylène Hostaform® de Celanese |
| **Exemple 1 (inv.)** | **83** | **82** | **74** | **80** | **83** | **73** |
| M 51 (comp.) | 75 | 44 | 46 | 41 | 59 | - |
| Fixodrop®(comp.) | 45 | 50 | 41 | 36 | 40 | 35 |

**Tableau 2 :**

| Angles de contact mesurés avec l'huile MOEBIUS Testöl 3 | | | | | | |
|---|---|---|---|---|---|---|
| | Substrat | | | | | |
| Agent épilame | Saphir | Acier | Nickel | Rhodium | Or | POM Hostaform® |
| **Exemple 1 (inv.)** | **65** | **62** | **57** | **63** | **61** | **57** |
| M 51 (comp.) | 60 | 34 | 37 | 36 | 47 | - |
| Fixodrop® (comp.) | 34 | 32 | 29 | 24 | 33 | 30 |

### Conclusion :

Les résultats ci-dessus montrent que les angles de contact obtenus après trois lavages horlogers avec les deux huiles (Testöl 3 et 9010) sont largement supérieurs pour les substrats épilamés selon l'invention par rapport au substrat épilamé par un agent épilame connu. L'effet épilame après trois lavages horlogers est donc largement supérieur avec les substrats épilamés selon la présente l'invention. Ceci démontre que les substrats épilamés selon l'invention présentent une meilleure résistance au lavage, quelle que soit leur nature.

## Revendications

1. Substrat comprenant une surface dont au moins une partie est recouverte d'un agent épilame, **caractérisé en ce que** ledit agent épilame comprend au moins un composé sous la forme d'un copolymère bloc comprenant au moins un bloc d'unités M associées par liaisons covalentes par leurs chaines principales, et au moins un bloc d'unités N associées par liaisons covalentes par leurs chaines principales, lesdits blocs étant connectés entre eux par liaisons covalentes par leurs chaines principales en séquences linéaires, où
M est 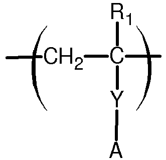 N est 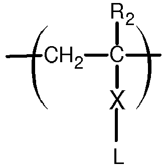
où R₁, R₂, identiques ou différents, sont H, un groupe alkyle en C₁-C₁₀, alkényle en C₁-C₁₀, et de préférence H, CH₃
Y, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
A constitue un groupement d'ancrage au substrat, et le bloc d'unités
M comprend au moins deux groupes A différents thioether et alkoxysilane
L, identique ou différent, est un groupement carboné en C₁-C₂₀ halogéné, de préférence fluoré.

2. Substrat selon la revendication 1, **caractérisé en ce qu'**au moins l'un du bloc d'unités M et du bloc d'unités N comprend au moins une unité P, où P est 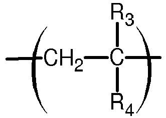
R₃, identique ou différent, étant H, un groupe alkyle en C₁-C₁₀, alkényle en C₁-C₁₀, et de préférence H, CH₃
R₄, identique ou différent, est H, CH₃, une chaîne hydrocarbonée pouvant contenir au moins un hétéroatome, linéaire ou ramifiée, saturée ou insaturée, comprenant au moins 2 atomes de carbone.

3. Substrat selon l'une des revendications précédentes, **caractérisé en ce que** Y, X, identiques ou différents, sont choisis parmi le groupe comprenant des groupes esters en C₁-C₂₀, de préférence en C₂-C₁₀, des groupes amides, et des groupes dérivés du styrène.

4. Substrat selon l'une des revendications précédentes, **caractérisé en ce que** L est un groupement carboné en C₂-C₂₀, de préférence en C₄-C₁₀.

5. Substrat selon l'une des revendications précédentes, **caractérisé en ce que** L est un groupement au moins partiellement fluoré, de préférence totalement fluoré.

6. Substrat selon l'une des revendications précédentes, **caractérisé en ce que** le copolymère bloc comprend entre 0.1% et 50%, de préférence entre 5% et 30% d'unités M, entre 1% et 99.9%, de préférence entre 50% et 99.9% d'unités N, et entre 0% et 50%, de préférence entre 0% et 30% d'unités P.

7. Substrat selon l'une des revendications précédentes, **caractérisé en ce que** le copolymère bloc comprend entre 10 et 350 unités.

8. Substrat selon l'une des revendications précédentes, **caractérisé en ce que** sa surface dont au moins une partie est recouverte de l'agent épilame est réalisée dans un matériau choisi parmi le groupe comprenant les métaux, les oxydes métalliques, les polymères, le saphir, le rubis, le silicium, les oxydes de silicium, les nitrures de silicium, les carbures de silicium, les DLC (Diamond Like Carbon), et leurs alliages.

9. Procédé d'épilamage d'au moins une partie d'une surface d'un substrat comprenant les étapes de :
a) préparation d'un agent épilame comprenant au moins un copolymère bloc tel que défini aux revendications 1 à 7
b) optionnellement, préparation de la surface du substrat
c) mise en contact de la surface du substrat avec l'agent épilame
d) séchage.

10. Procédé d'épilamage selon la revendication 9, **caractérisé en ce que** la préparation de l'agent épilame est réalisée par copolymérisation en bloc de monomères aptes à former au moins un bloc d'unités M et de monomères aptes à former au moins un bloc d'unités N.

11. Procédé d'épilamage selon la revendication 10, **caractérisé en ce qu'**au moins l'un du bloc d'unités M et du bloc d'unités N comprend au moins une unité P et **en ce que** la copolymérisation en bloc des monomères aptes à former au moins un bloc d'unités M ou au moins un bloc d'unités N s'effectue en présence de monomères aptes à former au moins une unité P.

12. Procédé d'épilamage selon l'une des revendications 9 à 11, **caractérisé en ce qu'**il comprend en outre, après l'étape c), une étape e) de réticulation complémentaire.

13. Procédé d'épilamage selon l'une des revendications 9 à 12, caractérisé ce que les monomères sont choisis parmi le groupe comprenant les monomères acrylates, méthacrylates, acrylamides, méthacrylamides, vinyliques et styréniques.

14. Utilisation d'un copolymère bloc comprenant au moins un bloc d'unités M associées par liaisons covalentes par leurs chaines principales, au moins un bloc d'unités N associées par liaisons covalentes par leurs chaines principales, au moins l'un du bloc d'unités M et du bloc d'unités N comprenant optionnellement au moins une unité P, associée par liaisons covalentes par leurs chaines principales, lesdits blocs étant connectés entre eux par liaisons covalentes par leurs chaines principales en séquences linéaires où
M est 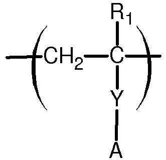 N est 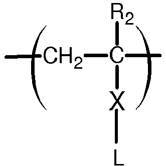 P est 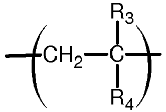
où R₁, R₂, R₃, identiques ou différents, sont H, un groupe alkyle en C₁-C₁₀, alkényle en C₁-C₁₀, et de préférence H, CH₃
Y, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
A constitue un groupement d'ancrage au substrat, et le bloc d'unités
M comprend au moins deux groupes A différents thioether et alkoxysi lanes
L, identique ou différent, est un groupement carboné en C₁-C₂₀ halogéné, de préférence fluoré
R₄, identique ou différent, est H, CH₃, une chaîne hydrocarbonée pouvant contenir au moins un hétéroatome, linéaire ou ramifiée, saturée ou insaturée, comprenant au moins 2 atomes de carbone, comme agent épilame d'au moins une partie d'une surface d'un substrat.

15. Pièce d'horlogerie ou de bijouterie comprenant un élément comportant un substrat selon l'une quelconque des revendications 1 à 8.

## Patentansprüche

1. Substrat, das eine Oberfläche aufweist, wovon zumindest ein Teil mit einem Epilamisierungsmittel beschichtet ist, **dadurch gekennzeichnet, dass** das Epilamisierungsmittel mindestens eine Komponente in Form eines Blockcopolymers enthält, das mindestens einen Block von Einheiten M enthält, die durch kovalente Bindungen durch ihre Hauptketten verbunden sind, und mindestens einen Block von Einheiten N enthält, die durch kovalente Bindungen durch ihre Hauptketten verbunden sind, wobei die Blöcke durch kovalente Bindungen durch ihre Hauptketten in linearen Folgen miteinander verbunden sind, wobei
M gleich 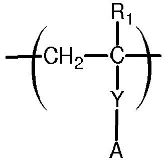 ist und N gleich 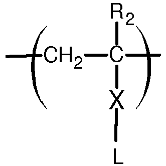 ist,
wobei R₁, R₂, gleich oder unterschiedlich, H, eine Alkylgruppe mit C₁-C₁₀, ein Alkenyl mit C₁-C₁₀ und vorzugsweise H, CH₃ sind
Y, X, gleich oder unterschiedlich, Spacer-Arme sind, gebildet aus einem Heteroatom oder aus einer Kohlenwasserstoffkette, die mindestens ein Heteroatom, linear oder verzweigt, enthalten kann und mindestens ein Kohlenstoffatom enthält
A eine Gruppe für die Verankerung an dem Substrat bildet und der Block von Einheiten M mindestens zwei verschiedene Thioether- und Alkoxysilan-A-Gruppen enthält
L, gleich oder unterschiedlich, eine halogenierte, vorzugsweise fluorierte Kohlenstoffgruppierung mit C₁-C₂₀ ist.

2. Substrat nach Anspruch 1, **dadurch gekennzeichnet, dass** mindestens der Block aus Einheiten M und/oder der Block aus Einheiten N mindestens eine Einheit P enthält, wobei P 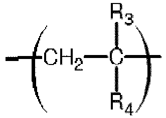 ist,
wobei R₃, gleich oder unterschiedlich, H, eine Alkylgruppe mit C₁-C₁₀, ein Alkenyl mit C₁-C₁₀ und vorzugsweise H, CH₃ ist
R₄, gleich oder unterschiedlich, H, CH₃, eine Kohlenwasserstoffkette ist, die mindestens ein lineares oder verzweigtes Heteroatom, gesättigt oder ungesättigt enthalten kann und mindestens zwei Kohlenstoffatome enthält.

3. Substrat nach einem der vorhergehenden Ansprüche, **dadurch gekennzeichnet, dass** Y, X, gleich oder unterschiedlich, aus der Gruppe gewählt sind, die Estergruppen mit C₁-C₂₀, vorzugsweise C₂-C₁₀, Amidgruppen und Styrolderivatgruppen enthält.

4. Substrat nach einem der vorhergehenden Ansprüche, **dadurch gekennzeichnet, dass** L eine Kohlenstoffgruppierung mit C₂-C₂₀, vorzugsweise C₄-C₁₀ ist.

5. Substrat nach einem der vorhergehenden Ansprüche, **dadurch gekennzeichnet, dass** L eine zumindest teilweise fluorierte und vorzugsweise vollständig fluorierte Gruppierung ist.

6. Substrat nach einem der vorhergehenden Ansprüche, **dadurch gekennzeichnet, dass** das Blockcopolymer im Bereich von 0,1 % bis 50 %, vorzugsweise von 5 % bis 30 % Einheiten M, im Bereich von 1 % bis 99,9 %, vorzugsweise von 50 % bis 99,9 %, Einheiten N und im Bereich von 0 % bis 50 %, vorzugsweise von 0 % bis 30 %, Einheiten P enthält.

7. Substrat nach einem der vorhergehenden Ansprüche, **dadurch gekennzeichnet, dass** das Blockcopolymer im Bereich von 10 bis 350 Einheiten enthält.

8. Substrat nach einem der vorhergehenden Ansprüche, **dadurch gekennzeichnet, dass** seine Oberfläche, wovon zumindest ein Teil mit dem Epilamisierungsmittel bedeckt ist, aus einem Material hergestellt ist, das aus der Gruppe gewählt ist, die Metalle, Metalloxide, Polymere, Saphir, Rubin, Silicium, Siliciumoxide, Siliciumnitride, Siliciumcarbide, DLC (Diamond Like Carbon) und ihre Legierungen enthält.

9. Epilamisierungsverfahren für zumindest einen Teil einer Oberfläche eines Substrats, umfassend die Schritte:
a) Vorbereiten eines Epilamisierungsmittels, das mindestens ein Blockcopolymer wie in den Ansprüchen 1 bis 7 definiert enthält,
b) optional Vorbereiten der Oberfläche des Substrats,
c) Herstellen eines Kontakts zwischen der Substratoberfläche und dem Epilamisierungsmittel,
d) Trocknen.

10. Epilamisierungsverfahren nach Anspruch 9, **dadurch gekennzeichnet, dass** die Vorbereitung des Epilamisierungsmittels durchgeführt wird durch Blockcopolymerisation von Monomeren, die geeignet sind, mindestens einen Block aus Einheiten M zu bilden und von Monomeren, die geeignet sind, mindestens einen Block aus Einheiten N zu bilden.

11. Epilamisierungsverfahren nach Anspruch 10, **dadurch gekennzeichnet, dass** mindestens der Block aus Einheiten M und/oder der Block aus Einheiten N mindestens eine Einheit P umfassen und dass die Blockcopolymerisation von Monomeren, die geeignet sind, mindestens einen Block aus Einheiten M oder mindestens einen Block aus Einheiten N zu bilden, in Gegenwart von Monomeren, die geeignet sind, mindestens eine Einheit P zu bilden, erfolgt.

12. Epilamisierungsverfahren nach einem der Ansprüche 9 bis 11, **dadurch gekennzeichnet, dass** es ferner nach dem Schritt c) einen Schritt e) für komplementäre Vernetzung umfasst.

13. Epilamisierungsverfahren nach einem der Ansprüche 9 bis 12, **dadurch gekennzeichnet, dass** die Monomere aus der Gruppe gewählt sind, die Acrylatmonomere, Methacrylate, Acrylamide, Methacrylamide, vinylartige und styrolartige Monomere enthält.

14. Verwendung eines Blockcopolymers, umfassend mindestens einen Block aus Einheiten M, die durch kovalente Bindungen durch ihre Hauptketten verbunden sind, mindestens einen Block aus Einheiten N, die durch kovalente Bindungen durch ihre Hauptketten verbunden sind, wobei mindestens der Block aus Einheiten M und/oder der Block aus Einheiten N optional mindestens eine Einheit P enthalten, die durch kovalente Bindungen durch ihre Hauptketten verbunden ist, wobei die Blöcke durch kovalente Bindungen durch ihre Hauptketten in linearen Folgen miteinander verbunden sind, wobei
M gleich 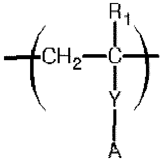 ist, N gleich 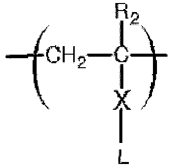 ist, P gleich 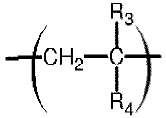 ist,
wobei R₁, R₂, gleich oder unterschiedlich, H, eine Alkylgruppe mit C₁-C₁₀, ein Alkenyl mit C₁-C₁₀ und vorzugsweise H, CH₃ sind
Y, X, gleich oder unterschiedlich, Spacer-Arme sind, gebildet aus einem Heteroatom oder aus einer Kohlenwasserstoffkette, die mindestens ein Heteroatom, linear oder verzweigt, enthalten kann und mindestens ein Kohlenstoffatom enthält
A eine Gruppe für die Verankerung an dem Substrat bildet und der Block von Einheiten M mindestens zwei verschiedene Thioether- und Alkoxysilan-A-Gruppen enthält
L, gleich oder unterschiedlich, eine halogenisierte, vorzugsweise fluorierte Kohlenstoffgruppierung mit C₁-C₂₀ ist
R₄, gleich oder unterschiedlich, H, CH₃, eine Kohlenwasserstoffkette ist, die mindestens ein lineares oder verzweigtes Heteroatom, gesättigt oder ungesättigt enthalten kann und mindestens 2 Kohlenstoffatome enthält,
als Epilamisierungsmittel zumindest eines Teils einer Oberfläche eines Substrats.

15. Zeitmessgerät oder Schmuckstück, das ein ein Substrat nach einem der Ansprüche 1 bis 8 aufweisendes Element enthält.

## Claims

1. Substrate comprising a surface, at least part of which is coated with an epilamization agent, **characterized in that** said epilamization agent comprises at least one compound in the form of a block copolymer comprising at least one block of M units linked by covalent bonds by their main chains, and at least one block of N units linked by covalent bonds by their main chains, said blocks being connected to each other by covalent bonds by their main chains in linear sequences, where:
M is 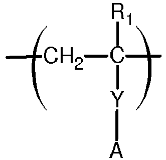 N is 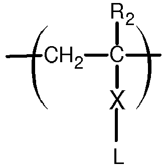
where R₁, R₂, which may be identical or different, are H, a C₁-C₁₀ alkyl group, a C₁-C₁₀ alkenyl group, and preferably H, a CH₃ group Y, X, which may be identical or different, are spacer arms formed of a heteroatom or of a linear or branched hydrocarbon chain comprising at least one carbon atom, and that may contain at least one heteroatom
A forms an anchoring moiety to the substrate, and the block of M units comprises at least two different A moieties thioethers and alkoxysi lanes
L, which may be identical or different, is a halogenated, preferably fluorinated, C₁-C₂₀ carbon moiety.

2. Substrate according to claim 1, **characterized in that** at least one of the block of M units and block of N units comprises at least one P unit, where P is 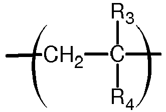
R₃, which may be identical or different, being H, a C₁-C₁₀ alkyl group, a C₁-C₁₀ alkenyl group, and preferably H, a CH₃ group
R₄, which may be identical or different, is H, CH₃, a linear or branched, saturated or unsaturated hydrocarbon chain comprising at least 2 carbon atoms, and that may contain at least one heteroatom.

3. Substrate according to any of the preceding claims, **characterized in that** Y, X, which may be identical or different, are selected from the group comprising C₁-C₂₀ ester groups, preferably C₂-C₁₀ ester groups, amide groups, and styrene derivative groups.

4. Substrate according to any of the preceding claims, **characterized in that** L is a C₂-C₂₀ carbon moiety, preferably a C₄-C₁₀ carbon moiety.

5. Substrate according to any of the preceding claims, **characterized in that** L is an at least partially fluorinated moiety, preferably a completely fluorinated moiety.

6. Substrate according to any of the preceding claims, **characterized in that** the block copolymer comprises between 0.1% and 50%, preferably between 5% and 30% of M units, between 1% and 99.9%, preferably between 50% and 99.9% of N units, and between 0% and 50%, preferably between 0% and 30% of P units.

7. Substrate according to any of the preceding claims, **characterized in that** the block copolymer comprises between 10 and 350 units.

8. Substrate according to any of the preceding claims, **characterized in that** the surface thereof, at least part of which is coated with the epilamization agent, is made of a material chosen from the group comprising metals, metal oxides, polymers, sapphire, ruby, silicon, silicon oxides, silicon nitrides, silicon carbides, DLC, and alloys thereof.

9. Method for epilamization of at least one part of a substrate surface comprising the steps of:
a) preparing an epilamization agent comprising at least one block copolymer as defined in claims 1 to 7
b) optionally, preparing the substrate surface
c) placing the substrate surface in contact with the epilamization agent
d) drying.

10. Epilamization method according to claim 9, **characterized in that** the preparation of the epilamization agent is achieved by the block copolymerization of monomers capable of forming at least one block of M units and of monomers capable of forming at least one block of N units.

11. Epilamization method according to claim 10, **characterized in that** at least one of the block of M units and block of N units comprises at least one P unit and **in that** the block copolymerisation of monomers capable of forming at least one block of M units or at least one block of N units is performed in the presence of monomers capable of forming at least one P unit.

12. Epilamization method according to any of claims 9 to 11, **characterized in that** after step c), the method also comprises a complementary cross-linking step e).

13. Epilamization method according to any of claims 9 to 12, **characterized in that** the monomers are selected from the group comprising acrylate, methacrylate, acrylamide, methacrylamide, vinyl and styrene monomers.

14. Use of a block copolymer comprising at least one block of M units linked by covalent bonds by their main chains, at least one block of N units linked by covalent bonds by their main chains, at least one of the block of M units and the block of N units optionally comprising at least one P unit, linked by covalent bonds by their main chains, said blocks being connected to each other by covalent bonds by their main chains in linear sequences, where
M is 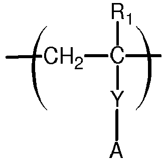 N is 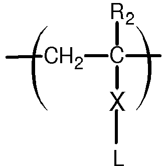 P is 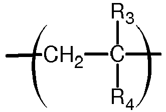
where R₁, R₂, R₃, which may be identical or different, are H, a C₁-C₁₀ alkyl group, a C₁-C₁₀ alkenyl group, and preferably H, a CH₃ group Y, X, which may be identical or different, are spacer arms formed of a heteroatom or of a linear or branched hydrocarbon chain comprising at least one carbon atom, and that may contain at least one heteroatom
A forms an anchoring moiety to the substrate, and the block of M units comprises at least two different A moieties thioethers and alkoxysi lanes
L, which may be identical or different, is a halogenated, preferably fluorinated, C₁-C₂₀ carbon moiety
R₄, which may be identical or different, is H, CH₃, a linear or branched, saturated or unsaturated hydrocarbon chain comprising at least 2 carbon atoms, and that may contain at least one heteroatom, as epilamization agent for at least one part of a substrate surface.

15. Timepiece or piece of jewellery comprising an element comprising a substrate according to any of claims 1 to 8.
